# EUROPEAN PATENT APPLICATION

(11) **EP 4 503 183 A1**
(43) Date of publication of application: **05.02.2025**
(21) Application number: 23778570.4
(22) Date of filing: 24.03.2023
(51) Int. Cl.: H01M 4/38, H01M 4/36, H01M 4/58, H01M 4/60, H01M 4/62

(54) **POSITIVE ELECTRODE MATERIAL AND SECONDARY BATTERY USING THE SAME**

(30) Priority: 31.03.2022 JP 2022058716
(71) Applicant: NISSAN MOTOR CO., LTD., Kanagawa 221-0023 (JP); Renault s.a.s, 92100 Boulogne Billancourt (FR)
(72) Inventor: LI, Zhenguang, Atsugi-shi, Kanagawa 243-0123 (JP); OGIHARA, Wataru, Atsugi-shi, Kanagawa 243-0123 (JP); OOTANI, Issei, Atsugi-shi, Kanagawa 243-0123 (JP); FUJIMOTO, Misaki, Atsugi-shi, Kanagawa 243-0123 (JP); ITO, Daisuke, Atsugi-shi, Kanagawa 243-0123 (JP)
(74) Representative: Grünecker Patent- und Rechtsanwälte PartG mbB
(86) International application number: PCT/IB2023/000145
(87) International publication number: WO 2023/187466

(57) **Abstract**

An object of the present invention is to provide a means for further reducing an internal resistance of a secondary battery which uses a positive electrode active material containing sulfur.

The present invention provides a positive electrode material which contains a porous carbon material, a positive electrode active material containing sulfur, and a lithium halide, wherein at least a part of the positive electrode active material and at least a part of the lithium halide are placed inside the pores of the porous carbon material.

## Description

### TECHNICAL FIELD

The present invention relates to a positive electrode material and a secondary battery using the same.

### BACKGROUND ART

In recent years, in order to cope with global warming, a reduction in amount of carbon dioxide is strongly desired. The automotive industry has a growing expectation on the introduction of electric vehicles (EV) and hybrid electric vehicles (HEV) for a reduction of carbon dioxide emission, and has been intensively working on the development of non-aqueous electrolyte secondary batteries such as motor-driving secondary batteries, which become key to the practical application of these electric vehicles.

The motor-driving secondary batteries are required to have very high output characteristics and high energy as compared to consumer lithium secondary batteries for mobile phones, notebook computers, and the like. Therefore, attention are being given to lithium secondary batteries having the highest theoretical energy among all practical batteries, and the development of such lithium secondary batteries has been pursued rapidly at present.

Lithium secondary batteries that are currently widespread use a combustible organic electrolyte solution as an electrolyte. In such a liquid-type lithium secondary battery, safety measures against liquid leakage, short circuit, overcharge, and the like are more strictly required than other batteries.

Therefore, in recent years, research and development on an all-solid-state lithium secondary battery using an oxide-based or sulfide-based solid electrolyte as an electrolyte have been actively conducted. The solid electrolyte is a material mainly made of an ion conductor that enables ion conduction in a solid. Therefore, in an all-solid-state lithium secondary battery, in principle, various problems caused by a combustible organic electrolyte solution do not occur unlike the conventional liquid-type lithium secondary battery. In general, use of a high-potential and large-capacity positive electrode material and a large-capacity negative electrode material can achieve significant improvement in output density and energy density of a battery. For example, elemental sulfur (S₈) has an extremely large theoretical capacity of about 1670 mAh/g, and has an advantage of being abundant in resources as low cost.

Meanwhile, since elemental sulfur has high resistance, it is difficult to secure a sufficient charge and discharge capacity when the elemental sulfur is used at a practical current as a positive electrode material. For the purpose of addressing such a problem, JP 2010-95390 A proposes a technique in which a mesoporous carbon composite material containing at least a mesoporous carbon and sulfur placed in mesopores of the mesoporous carbon is used as a positive electrode material of an all-solid-state battery. According to JP 2010-95390 A, when a positive electrode material having such a conjugation is used, the electron conductivity is improved by particle size reduction of sulfur and conjugation of sulfur with mesoporous carbon, and battery characteristics can be improved.

### SUMMARY OF INVENTION

Here, depending on the application of the secondary battery, it is required that a sufficient capacity can be taken out during charging and discharging at a high charge-discharge rate (that is, so-called charge-discharge rate characteristics are required to be sufficient). For example, a secondary battery having insufficient charge-discharge rate characteristics cannot utilize a sufficient capacity in response to rapid charging and discharging. In order to improve the charge-discharge rate characteristics of the secondary battery, it is necessary to reduce an internal resistance of the battery. However, according to the study of the present inventors, it has been found that it is difficult to sufficiently reduce the internal resistance even with the technique of JP 2010-95390 A described above.

Therefore, an object of the present invention is to provide a means for further reducing an internal resistance of a secondary battery which uses a positive electrode active material containing sulfur.

The present inventors have conducted intensive studies to solve the above problems. As a result, the present inventors have found that the above problems can be solved by using a positive electrode material containing a positive electrode active material containing sulfur and a lithium halide inside pores of a porous carbon material, and have completed the present invention.

An aspect of the present invention is a positive electrode material containing: a porous carbon material; a positive electrode active material containing sulfur; and a lithium halide, wherein at least a part of the positive electrode active material and at least a part of the lithium halide are placed inside pores of the porous carbon material.

### BRIEF DESCRIPTION OF DRAWINGS

Fig. 1 is a perspective view illustrating an appearance of a flat laminate type all-solid-state lithium secondary battery as one embodiment of the present invention.
Fig. 2 is a cross-sectional view taken along line 2-2 illustrated in Fig. 1.
Fig. 3(a) is a schematic cross-sectional view of a conventional positive electrode material, and Fig. 3(b) is a schematic cross-sectional view of a positive electrode material according to one embodiment of the present invention.
Fig. 4 shows an XRD spectrum of a positive electrode material produced in Example 1.
Fig. 5 shows an XRD spectrum of a positive electrode material produced in Example 6.
Fig. 6 shows an XRD spectrum of a positive electrode material produced in Comparative Example 1.
Fig. 7 shows an XRD spectrum of a positive electrode material produced in Comparative Example 2.

### DESCRIPTION OF EMBODIMENTS

Hereinafter, embodiments of the present invention described above will be described with reference to the drawings, but the technical scope of the present invention should be determined based on the description of the claims, and is not limited to the following embodiments. Dimensional ratios in the drawings are exaggerated for convenience of description, and may be different from actual ratios. Hereinafter, the present invention will be described by exemplifying a laminate type (internal parallel connection type) all-solid-state lithium secondary battery as one embodiment of the secondary battery. As described above, the solid electrolyte constituting the all-solid-state lithium secondary battery is a material mainly made of an ion conductor that enables ion conduction in a solid. For this reason, the all-solid-state lithium secondary battery has the advantage that, in principle, various problems caused by a combustible organic electrolyte solution do not occur unlike the conventional liquid-type lithium secondary battery. In general, another advantaged is that use of a high-potential and large-capacity positive electrode material and a large-capacity negative electrode material can achieve significant improvement in output density and energy density of a battery.

An aspect of the present invention is a positive electrode material containing: a porous carbon material; a positive electrode active material containing sulfur; and a lithium halide, wherein at least a part of the positive electrode active material and at least a part of the lithium halide are placed inside pores of the porous carbon material. According to the positive electrode material according to the present aspect can further reduce the internal resistance of the secondary battery.

According to the present invention, in a secondary battery using a positive electrode active material containing sulfur, an internal resistance of the secondary battery can be further reduced.

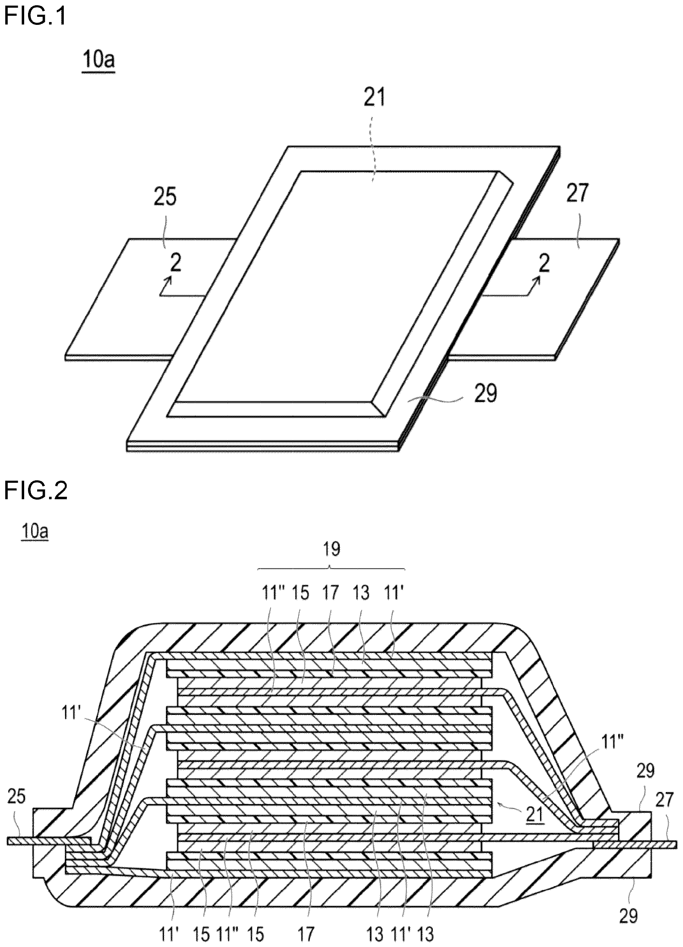

Fig. 1 is a perspective view illustrating an appearance of a flat laminate type all-solid-state lithium secondary battery as one embodiment of the present invention. Fig. 2 is a cross-sectional view taken along line 2-2 illustrated in Fig. 1. The battery is formed into the laminate type, thereby allowing the battery to be compact and have a high capacity. In the present specification, a flat laminate type lithium secondary battery (hereinafter, also simply referred to as "laminate type battery") illustrated in Figs. 1 and 2 that is not a bipolar type will be described in detail as an example. However, in the case of viewing the present invention in an electric connection form (electrode structure) in the lithium secondary battery according to the present aspect, the present invention can be applied to both a non-bipolar type (internal parallel connection type) battery and a bipolar type (internal serial connection type) battery.

As illustrated in Fig. 1, a laminate type battery 10a has a rectangular flat shape, and a negative electrode current collecting plate 25 and a positive electrode current collecting plate 27 for extracting electric power are extended from both sides of the battery. A power generating element 21 is wrapped in a battery outer casing material (laminate film 29) of the laminate type battery 10a, the periphery of the battery outer casing material is heat-sealed, and the power generating element 21 is hermetically sealed in a state where the negative electrode current collecting plate 25 and the positive electrode current collecting plate 27 are extended to the outside.

The lithium secondary battery according to the present aspect is not limited to a laminate type flat shape. A wound type lithium secondary battery is not particularly limited, and for example, may have a cylindrical shape, or may have a rectangular flat shape obtained by deforming such a cylindrical shape. As for the lithium secondary battery having a cylindrical shape, for example, a laminate film may be used or a conventional cylindrical can (metal can) may be used as an outer casing material thereof, and the outer casing material is not particularly limited. Preferably, a power generating element is housed in a laminate film containing aluminum. According to this form, weight reduction can be achieved.

In addition, the extending of the current collecting plates (25 and 27) illustrated in Fig. 1 is also not particularly limited. For example, the negative electrode current collecting plate 25 and the positive electrode current collecting plate 27 may be extended from the same side, or each of the negative electrode current collecting plate 25 and the positive electrode current collecting plate 27 may be divided into a plurality of pieces and extended from each side, and the extending is not limited to that illustrated in Fig. 1. In a wound type lithium battery, for example, terminals may be formed by using a cylindrical can (metal can) instead of a tab.

As illustrated in Fig. 2, the laminate type battery 10a of the present embodiment has a structure in which the power generating element 21 having a flat and substantially rectangular shape in which a charge-discharge reaction actually proceeds is sealed inside the laminate film 29 as a battery outer casing material. Here, the power generating element 21 has a configuration in which a positive electrode, a solid electrolyte layer 17, and a negative electrode are laminated. The positive electrode has a structure in which a positive electrode active material layer 15 containing a positive electrode active material is disposed on both surfaces of a positive electrode current collector 11". The negative electrode has a structure in which a negative electrode active material layer 13 containing a negative electrode active material is disposed on both surfaces of a negative electrode current collector 11'. Specifically, the positive electrode, the solid electrolyte layer, and the negative electrode are laminated in this order such that one positive electrode active material layer 15 and the negative electrode active material layer 13 adjacent thereto face each other with the solid electrolyte layer 17 interposed therebetween. Thereby, the positive electrode, the solid electrolyte layer, and the negative electrode that are adjacent constitute one single battery layer 19. Therefore, it can be said that the laminate type battery 10a illustrated in Fig. 2 has a configuration in which a plurality of single battery layers 19 are laminated to be electrically connected in parallel.

As illustrated in Fig. 2, although the negative electrode active material layer 13 is disposed on only one surface of each of outermost negative electrode current collectors located in both outermost layers of the power generating element 21, the active material layer may be provided on both surfaces. That is, instead of using a current collector exclusively for an outermost layer provided with the active material layer only on one surface thereof, a current collector provided with the active material layer on both surfaces thereof may be used as it is as an outermost current collector. In some cases, the negative electrode active material layer 13 and the positive electrode active material layer 15 may be used as the negative electrode and the positive electrode, respectively, without using the current collectors (11' and 11").

The negative electrode current collector 11' and the positive electrode current collector 11" have a structure in which the negative electrode current collecting plate (tab) 25 and the positive electrode current collecting plate (tab) 27 which are electrically connected to the respective electrodes (the positive electrode and the negative electrode) are respectively attached to the negative electrode current collector 11' and the positive electrode current collector 11" and are led to an outside of the laminate film 29 so as to be sandwiched between ends of the laminate film 29 as the battery outer casing material. The positive electrode current collecting plate 27 and the negative electrode current collecting plate 25 may be attached to the positive electrode current collector 11" and the negative electrode current collector 11' of the respective electrodes with a positive electrode lead and a negative electrode lead (not illustrated) interposed therebetween, respectively by ultrasonic welding, resistance welding, or the like as necessary.

Hereinafter, main constituent members of the lithium secondary battery according to the present aspect will be described.

### [Current collector]

A current collector has a function of mediating transfer of electrons from an electrode active material layer (the positive electrode active material layer or the negative electrode active material layer). A material constituting the current collector is not particularly limited. As a constituent material of the current collector, for example, a metal or a resin having conductivity can be adopted.

Specific examples of the metal include aluminum, nickel, iron, stainless steel, titanium, copper, and the like. In addition to these, a clad material of nickel and aluminum, a clad material of copper and aluminum, or the like may be used. A foil in which a metal surface is coated with aluminum may be used. Among them, aluminum, stainless steel, copper, and nickel are preferable from the viewpoint of the electron conductivity, the battery operating potential, the adhesion of the negative electrode active material by sputtering to the current collector, and the like. Examples of the resin having conductivity include a resin obtained by adding a conductive filler to a non-conductive polymer material.

The current collector may have a single-layer structure made of a single material, or may have a laminated structure in which layers made of these materials are appropriately combined. From the viewpoint of weight reduction of the current collector, it is preferable that the current collector includes at least a conductive resin layer made of a resin having conductivity. From the viewpoint of blocking the movement of lithium ions between single battery layers, a metal layer may be provided in a part of the current collector. As long as a negative electrode active material layer and a positive electrode active material layer described later have conductivity by themselves and can exhibit a current collecting function, a current collector as a member different from these electrode active material layers may not be used. In such an embodiment, the negative electrode active material layer described later as it is constitutes a negative electrode, and the positive electrode active material layer described later as it is constitutes a positive electrode.

### [Negative electrode (negative electrode active material layer)]

In the laminate type battery according to the embodiment illustrated in Figs. 1 and 2, the negative electrode active material layer 13 contains a negative electrode active material. The kind of the negative electrode active material is not particularly limited, and examples thereof include a carbon material, a metal oxide, and a metal active material. Examples of the carbon material include natural graphite, artificial graphite, mesocarbon microbead (MCMB), highly oriented graphite (HOPG), hard carbon, soft carbon, and the like. Examples of the metal oxide include Nb₂O₅, Li₄Ti₅O₁₂, and the like. A metal active material such as a silicon-based negative electrode active material or a tin-based negative electrode active material may be used. Here, silicon and tin belong to Group 14 elements, and are known to be a negative electrode active material that can greatly improve the capacity of a non-aqueous electrolyte secondary battery. Since simple substances of silicon and tin can occlude and release a large number of charge carriers (lithium ions and the like) per unit volume (mass), they become a high-capacity negative electrode active material. Here, a Si simple substance is preferably used as the silicon-based negative electrode active material. Similarly, it is also preferable to use a silicon oxide such as SiOₓ (0.3 ≤ x ≤ 1.6) disproportionated into two phases: a Si phase and a silicon oxide phase. At this time, the range of x is more preferably 0.5 ≤ x ≤ 1.5 and still more preferably 0.7 ≤ x ≤ 1.2. Furthermore, an alloy containing silicon (silicon-containing alloy-based negative electrode active material) may be used. Meanwhile, examples of the negative electrode active material containing a tin element (tin-based negative electrode active material) include a Sn simple substance, a tin alloy (a Cu-Sn alloy and a Co-Sn alloy), an amorphous tin oxide, a tin silicon oxide, and the like. Among them, SnB_{0.4}P_{0.6}O_{3.1} is exemplified as the amorphous tin oxide. SnSiO₃ is exemplified as the tin silicon oxide. As the negative electrode active material, a metal containing lithium may be used. Such a negative electrode active material is not particularly limited as long as it is an active material containing lithium, and examples thereof include lithium-containing alloys in addition to metal lithium. Examples of the lithium-containing alloys include an alloy of Li and at least one of In, Al, Si, and Sn. In some cases, two or more kinds of negative electrode active materials may be used in combination. Needless to say, a negative electrode active material other than the above-described negative electrode active materials may be used. The negative electrode active material preferably contains metal lithium, a silicon-based negative electrode active material, or a tin-based negative electrode active material, and particularly preferably contains metal lithium.

A content of the negative electrode active material in the negative electrode active material layer is not particularly limited, but for example, is preferably within a range of 40 to 99 mass%, and more preferably within a range of 50 to 90 mass%.

The negative electrode active material layer preferably further contains a solid electrolyte. When the negative electrode active material layer contains the solid electrolyte, the ion conductivity of the negative electrode active material layer can be improved. Examples of the solid electrolyte include a sulfide solid electrolyte and an oxide solid electrolyte, and a sulfide solid electrolyte is preferable. In the present specification, the solid electrolyte refers to a material mainly made of an ion conductor that enables ion conduction in a solid, and particularly refers to a material having lithium ion conductivity at a normal temperature (25°C) of 1×10⁻⁵ S/cm or more. Here, the value of the ion conductivity can be measured by an alternating current impedance method.

Examples of the sulfide solid electrolyte include LiI-Li₂S-SiS₂, LiI-Li₂S-P₂O₅, LiI-Li₃PO₄-P₂S₅, Li₂S-P₂S₅, LiI-Li₃PS₄, LiI-LiBr-Li₃PS₄, Li₃PS₄, Li₂S-P₂S₅-LiI, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers, and Z is any of Ge, Zn, and Ga), Li₂S-GeS₂, Li₂S-SiS₂-Li₃PO₄, Li₂S-SiS₂-LiₓMO_{y} (where x and y are positive numbers, and M is any of P, Si, Ge, B, Al, Ga, and In), and the like. The description of "Li₂S-P₂S₅" means a sulfide solid electrolyte obtained by using a raw material composition containing Li₂S and P₂S₅, and the same applies to other descriptions.

The sulfide solid electrolyte may have, for example, a Li₃PS₄ skeleton, a Li₄P₂S₇ skeleton, or a Li₄P₂S₆ skeleton. Examples of the sulfide solid electrolyte having a Li₃PS₄ skeleton include LiI-Li₃PS₄, LiI-LiBr-Li₃PS₄, and Li₃PS₄. Examples of the sulfide solid electrolyte having a Li₄P₂S₇ skeleton include a Li-P-S-based solid electrolyte called LPS (for example, Li₇P₃S₁₁). As the sulfide solid electrolyte, for example, LGPS represented by Li₍₄₋ₓ₎Ge₍₁₋ₓ₎PₓS₄ (x satisfies 0 < x < 1) or the like may be used. Among them, the sulfide solid electrolyte is preferably a sulfide solid electrolyte containing a P element and more preferably a material containing Li₂S-P₂S₅ as a main component. The sulfide solid electrolyte may contain halogen (F, Cl, Br, I). In one preferred embodiment, the sulfide solid electrolyte contains Li₆PS₅X (where X is Cl, Br, or I, preferably Cl).

When the sulfide solid electrolyte is Li₂S-P₂S₅-based, a ratio of Li₂S and P₂S₅ in terms of molar ratio is preferably within a range of Li₂S : P₂S₅ = 50 : 50 to 100 : 0, and particularly preferably within a range of Li₂S : P₂S₅ = 70 : 30 to 80 : 20.

The sulfide solid electrolyte may be sulfide glass, crystallized sulfide glass, or a crystalline material obtained by a solid phase method. The sulfide glass can be obtained, for example, by performing mechanical milling (ball milling or the like) on a raw material composition. The crystallized sulfide glass can be obtained, for example, by heat-treating sulfide glass at a temperature equal to or higher than a crystallization temperature. The ion conductivity (for example, Li ion conductivity) of the sulfide solid electrolyte at a normal temperature (25°C) is, for example, preferably 1×10⁻⁵ S/cm or more and more preferably 1×10⁻⁴ S/cm or more.

Examples of the oxide solid electrolyte include a compound having a NASICON-type structure, and the like. Examples of the compound having a NASICON-type structure include a compound (LAGP) represented by general formula: Li₁₊ₓAlₓGe₂₋ₓ(PO₄)₃ (0 ≤ x ≤ 2), a compound (LATP) represented by general formula: Li₁₊ₓAlₓTi₂₋ₓ(PO₄)₃ (0 ≤ x ≤ 2), and the like. Other examples of the oxide solid electrolyte include LiLaTiO (for example, Li_{0.34}La_{0.51}TiO₃), LiPON (for example, Li_{2.9}PO_{3.3}N_{0.46}), LiLaZrO (for example, Li₇La₃Zr₂O₁₂), and the like.

A content of the solid electrolyte in the negative electrode active material layer is, for example, preferably within a range of 1 to 60 mass% and more preferably within a range of 10 to 50 mass%.

The negative electrode active material layer may further contain at least one of a conductive aid and a binder in addition to the negative electrode active material and the solid electrolyte described above.

Examples of the conductive aid include, but are not limited to, metals such as aluminum, stainless steel (SUS), silver, gold, copper, and titanium, alloys or metal oxides containing these metals; and carbon such as carbon fibers (specifically, vapor grown carbon fibers (VGCF), polyacrylonitrile-based carbon fibers, pitch-based carbon fibers, rayon-based carbon fibers, activated carbon fibers, and the like), carbon nanotubes (CNT), and carbon black (specifically, acetylene black, Ketjen black (registered trademark), furnace black, channel black, thermal lamp black, and the like). A particle-shaped ceramic material or resin material coated with the metal material by plating or the like can also be used as the conductive aid. Among these conductive aids, from the viewpoint of electrical stability, the conductive aid preferable contains at least one selected from the group consisting of aluminum, stainless steel, silver, gold, copper, titanium, and carbon, more preferably contains at least one selected from the group consisting of aluminum, stainless steel, silver, gold, and carbon, and still more preferably contains at least one kind of carbon. These conductive aids may be used singly or in combination of two or more kinds thereof.

When the negative electrode active material layer contains a conductive aid, a content of the conductive aid in the negative electrode active material layer is not particularly limited, but is preferably 0 to 10 mass%, more preferably 2 to 8 mass%, and still more preferably 4 to 7 mass%, with respect to the total mass of the negative electrode active material layer. When the content is in such a range, a stronger electron conduction path can be formed in the negative electrode active material layer, and this can effectively contribute to improvement of battery characteristics.

Meanwhile, the binder is not particularly limited, and examples thereof include the following materials: thermoplastic polymers such as polybutylene terephthalate, polyethylene terephthalate, polyvinylidene fluoride (PVDF) (including a compound in which a hydrogen atom is substituted with another halogen element), polyethylene, polypropylene, polymethylpentene, polybutene, polyether nitrile, polytetrafluoroethylene, polyacrylonitrile, polyimide, polyamide, an ethylene-vinyl acetate copolymer, polyvinyl chloride, styrene-butadiene rubber (SBR), an ethylene-propylene-diene copolymer, a styrene-butadiene-styrene block copolymer and a hydrogenated product thereof, and a styrene-isoprene-styrene block copolymer and a hydrogenated product thereof; fluorine resins such as a tetrafluoroethylene-hexafluoropropylene copolymer (FEP), a tetrafluoroethylene-perfluoroalkylvinylether copolymer (PFA), an ethylene-tetrafluoroethylene copolymer (ETFE), polychlorotrifluoroethylene (PCTFE), an ethylene-chlorotrifluoroethylene copolymer (ECTFE), and polyvinyl fluoride (PVF); vinylidene fluoride-based fluorine rubber such as vinylidene fluoride-hexafluoropropylene-based fluorine rubber (VDF-HFP-based fluorine rubber), vinylidene fluoride-hexafluoropropylene-tetrafluoroethylene-based fluorine rubber (VDF-HFP-TFE-based fluorine rubber), vinylidene fluoride-pentafluoropropylene-based fluorine rubber (VDF-PFP-based fluorine rubber), vinylidene fluoride-pentafluoropropylene-tetrafluoroethylene-based fluorine rubber (VDF-PFP-TFE-based fluorine rubber), vinylidene fluoride-perfluoromethylvinylether-tetrafluoroethylene-based fluorine rubber (VDF-PFMVE-TFE-based fluorine rubber), and vinylidene fluoride-chlorotrifluoroethylene-based fluorine rubber (VDF-CTFE-based fluorine rubber); epoxy resins; and the like. Among them, polyimide, styrene-butadiene rubber, carboxymethyl cellulose, polypropylene, polytetrafluoroethylene, polyacrylonitrile, and polyamide are more preferable.

The thickness of the negative electrode active material layer varies depending on the configuration of the intended secondary battery, but is, for example, preferably within a range of 0.1 to 1000 µm.

### [Solid electrolyte layer]

In the laminate type battery according to the embodiment illustrated in Figs. 1 and 2, the solid electrolyte layer is a layer interposed between the positive electrode active material layer and the negative electrode active material layer described above and essentially containing a solid electrolyte.

A specific form of the solid electrolyte contained in the solid electrolyte layer is not particularly limited, and examples and preferred forms of the solid electrolyte described in the section of the negative electrode active material layer are adopted in the same manner. In some cases, solid electrolytes other than the solid electrolyte described above may be used in combination.

The solid electrolyte layer may further contain a binder in addition to the predetermined solid electrolyte described above. As for the binder that can be contained in the solid electrolyte layer, the examples and preferred forms described in the section of the negative electrode active material layer can be adopted in the same manner.

The thickness of the solid electrolyte layer varies depending on the configuration of the intended lithium secondary battery, but is preferably 800 µm or less, more preferably 700 µm or less, and still more preferably 600 µm or less, from the viewpoint that the volume energy density of the battery can be improved. Meanwhile, the lower limit value of the thickness of the solid electrolyte layer is not particularly limited, but is preferably 1 µm or more, more preferably 5 µm or more, and still more preferably 10 µm or more.

### [Positive electrode active material layer]

In the laminate type battery according to the embodiment illustrated in Figs. 1 and 2, the positive electrode active material layer contains the positive electrode material according to one aspect of the present invention. The positive electrode material contains a porous carbon material, a positive electrode active material containing sulfur, and a lithium halide. At least a part of the positive electrode active material and at least a part of the lithium halide are placed inside pores of the porous carbon material.

### (Positive electrode active material containing sulfur)

The kind of the positive electrode active material containing sulfur is not particularly limited, and examples thereof include particles or a thin film of an organic sulfur compound or an inorganic sulfur compound in addition to an elemental sulfur (S), and any material may be used as long as the material can release lithium ions during charging and occlude lithium ions during discharging by utilizing an oxidation-reduction reaction of sulfur. Examples of the organic sulfur compound include a disulfide compound, a sulfur-modified polyacrylonitrile typified by the compound described in WO 2010/044437 A, a sulfur-modified polyisoprene, rubeanic acid (dithiooxamide), a polycarbon sulfide, and the like. Among them, a disulfide compound, a sulfur-modified polyacrylonitrile, and rubeanic acid are preferable, and a sulfur-modified polyacrylonitrile is particularly preferable. As the disulfide compound, a disulfide compound having a dithiobiurea derivative, a thiourea group, a thioisocyanate, or a thioamide group is more preferable. Here, the sulfur-modified polyacrylonitrile is a modified polyacrylonitrile containing a sulfur atom obtained by mixing sulfur powder and polyacrylonitrile and heating the mixture under an inert gas or under reduced pressure. The estimated structure is a structure in which ring closure causes polyacrylonitrile to be polycyclic, and at least a part of S is bound to C, as shown in, for example, Chem. Mater. 2011, 23, 5024-5028. The compound described in this literature has strong peak signals around 1330 cm⁻¹ and 1560 cm⁻¹ in the Raman spectrum, and further has peaks around 307 cm⁻¹, 379 cm⁻¹, 472 cm⁻¹, and 929 cm⁻¹. Meanwhile, the inorganic sulfur compound is preferable because it is excellent in stability, and specific examples thereof include elemental sulfur (S), S-carbon composite, TiS₂, TiS₃, TiS₄, NiS, NiS₂, CuS, FeS₂, Li₂S, MoS₂, MoS₃, MnS, MnS₂, CoS, CoS₂, and the like. Among them, elemental sulfur (S), TiS₂, TiS₃, TiS₄, FeS₂, and MoS₂ are preferable, elemental sulfur (S), TiS₂, and FeS₂ are more preferable, and from the viewpoint of high capacity, elemental sulfur (S) is particularly preferable. As the elemental sulfur (S), α-sulfur, β-sulfur, or γ-sulfur having a S₈ structure can be used.

The positive electrode material according to the present aspect may further contain a sulfur-free positive electrode active material (other positive electrode active material) in addition to the positive electrode active material containing sulfur. Examples of the other positive electrode active material include layered rock salt-type active materials such as LiCoO₂, LiMnO₂, LiNiO₂, LiVO₂, and Li(Ni-Mn-Co)O₂; spinel-type active materials such as LiMn₂O₄ and LiNi_{0.5}Mn_{1.5}O₄; olivine-type active materials such as LiFePO₄ and LiMnPO₄; Si-containing active materials such as Li₂FeSiO₄ and Li₂MnSiO₄; and the like. Examples of the oxide active material other than those described above include Li₄Ti₅O₁₂.

In some cases, two or more kinds of positive electrode active materials may be used in combination. Needless to say, a positive electrode active material other than the above-described positive electrode active materials may be used. However, a ratio of a content of the positive electrode active material containing sulfur to a total amount of 100 mass% of the positive electrode active material is preferably 50 mass% or more, more preferably 70 mass% or more, still more preferably 80 mass% or more, yet still more preferably 90 mass% or more, particularly preferably 95 mass% or more, and most preferably 100 mass%.

### (Lithium halide)

The positive electrode material according to the present aspect contains a lithium halide (LiX, X is a halogen atom). Examples of the lithium halide include lithium fluoride, lithium chloride, lithium bromide, lithium iodide, and the like. In the positive electrode material according to the present aspect, from the viewpoint of excellent ion conductivity, lithium chloride or lithium iodide is preferable, and lithium iodide is more preferable. Two or more kinds of lithium halides may be used in combination.

### (Porous carbon material)

The positive electrode material according to the present aspect essentially contains a carbon material (porous carbon material) having pores. The specific form of the porous carbon material contained in the positive electrode material according to the present aspect is not particularly limited as long as it is a carbon material having pores, and conventionally known materials can be appropriately adopted.

Examples of the porous carbon material include activated carbon, carbon black such as Ketjen black (registered trademark) (highly conductive carbon black), (oil) furnace black, channel black, acetylene black, thermal black, and lamp black, and carbon particles (carbon carriers) made of coke, natural graphite, artificial graphite, and the like. A mold such as ceramics and a carbon raw material such as a resin are mixed and fired in an inert atmosphere, the mold is then melted with an acid to synthesize a carbon material having a porous structure to which the shape of the mold is transferred, and this carbon material may be used as a carbon material. At this time, a pore size and a pore volume of the obtained porous carbon material can be changed by appropriately adjusting the particle diameter of the mold and the blending ratio of the carbon raw material.

The main component of the porous carbon material is preferably carbon. Here, the phrase "the main component is carbon" means that carbon atoms are contained as a main component, and includes the concept of consisting only of carbon atoms and the concept of consisting substantially of carbon atoms. The phrase "consisting substantially of carbon atoms" means that the mixing of approximately 2 to 3 mass% or less of impurities may be allowable.

A BET specific surface area of the porous carbon material is not particularly limited, but is preferably 200 m²/g or more, more preferably 500 m²/g or more, still more preferably 800 m²/g or more, particularly preferably 1200 m²/g or more, and most preferably 1500 m²/g or more. A total pore volume of the porous carbon material is preferably 1.0 mL/g or more, more preferably 1.3 mL/g or more, and still more preferably 1.5 mL/g or more. When the BET specific surface area and the total pore volume of the porous carbon material are values within such ranges, a sufficient amount of the pores can be held, and thus a sufficient amount of the positive electrode active material can be held. The values of the BET specific surface area of the porous carbon material and the total pore volume of the porous carbon material can be measured by measurement based on adsorption and desorption of nitrogen. The measurement based on adsorption and desorption of nitrogen is performed using BELSORP mini manufactured by MicrotracBEL Corp., and is performed by a multipoint method at a temperature of -196°C. The BET specific surface area is determined from the adsorption isotherm in a relative pressure range of 0.01 < P/P₀ < 0.05. The total pore volume is determined from the volume of the adsorbed N₂ at a relative pressure of 0.96.

An average pore size of the porous carbon material is not particularly limited, but is preferably 100 nm or less, more preferably 50 nm or less, and particularly preferably 30 nm or less. When the average pore size of the porous carbon material is a value within these ranges, the contact area with the positive electrode active material or the lithium halide can be increased to increase the reaction area. In addition, electrons can be sufficiently supplied to the active material present at a position away from the pore wall, among the positive electrode active materials containing sulfur placed inside the pores. As a result, the effect of the present invention can be more remarkably obtained. The value of the average pore size of the porous carbon material can be calculated by the measurement based on adsorption and desorption of nitrogen, in the same manner as the case of determining the values of the BET specific surface area and the total pore volume. In the present specification, the pore distribution of the porous carbon material obtained using the BJH method is employed. The lower limit value of the average pore size of the porous carbon material is also not particularly limited, but is, for example, 1 nm or more.

In the positive electrode material according to the present aspect, the porous carbon material preferably has pores having a pore size in a range of 1 to 100 nm. In addition, a percentage of a pore volume of pores having a pore size in a range of 1 to 4 nm with respect to a pore volume of pores having a pore size in a range of 1 to 100 nm among the pores of the porous carbon material is preferably 20% or less. Thereby, the positive electrode active material and/or the lithium halide can be easily held up to the inside of the pores. Also inside the pores, not only entrance and exit of electrons through the porous carbon material but also entrance and exit of charge carriers through the lithium halide can smoothly proceed on the surface of the positive electrode active material. As a result, even around the positive electrode active material located deep in the pores, a three-phase interface in which the positive electrode active material, the porous carbon material, and the lithium halide coexist is sufficiently formed, and the charge-discharge reaction can sufficiently proceed. As a result, it is considered that the internal resistance of the battery is further reduced. From the viewpoint of further exerting the effect of reducing the internal resistance, the value of the percentage is more preferably 18% or less, still more preferably 15% or less, yet still more preferably 12% or less, and particularly preferably 9% or less. The lower limit value of the percentage is not particularly limited, but is, for example, 3% or more.

An average particle size (primary particle size) of the porous carbon material is not particularly limited, but is preferably 0.05 to 50 µm, more preferably 0.1 to 20 µm, and still more preferably 0.5 to 10 µm. In the present specification, the "particle size of the porous carbon material" means the largest distance L among the distances between any arbitrary two points on the contour line of the particle of the porous carbon material. As the value of the "average particle size of the porous carbon material", a value calculated as an arithmetic average value of the particle sizes of the particles observed in several to several dozen visual fields using an observation means such as a scanning electron microscope (SEM) or a transmission electron microscope (TEM) is adopted.

As described above, the positive electrode material according to the present aspect contains a porous carbon material, a positive electrode active material containing sulfur, and a lithium halide, and at least a part of the positive electrode active material and at least a part of the lithium halide are placed inside the pores of the porous carbon material.

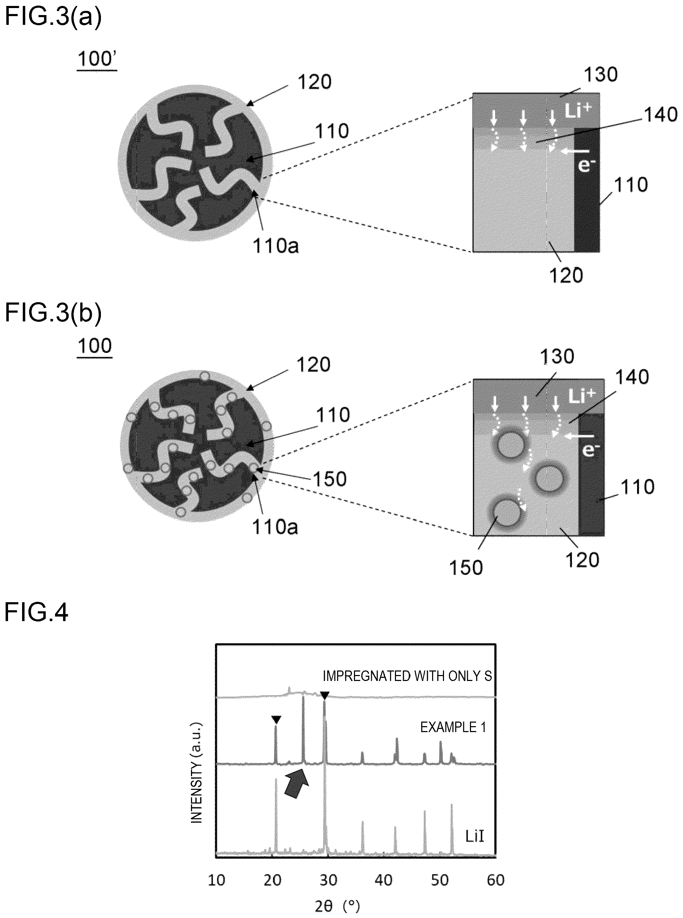

Fig. 3(a) is a schematic cross-sectional view of a conventional positive electrode material 100'. Fig. 3(b) is a schematic cross-sectional view of a positive electrode material 100 according to one embodiment of the present invention. In Figs. 3(a) and 3(b), a porous carbon material 110 has a large number of pores 110a, and the inside of the pores 110a is filled with a positive electrode active material 120 containing sulfur.

However, in the case of producing an electrode using the positive electrode material 100' of Fig. 3(a), the reaction resistance of the electrode reaction is high. This is considered to be because, in addition to the low conductivity of the positive electrode active material 120 containing sulfur, the positive electrode active material 120 generates Li₂S having low ion conductivity in a region 140 near an interface with a solid electrolyte 130 during the electrode reaction, and the resistance to diffusion of lithium ions in the positive electrode material increases.

On the other hand, the positive electrode material 100 of the present invention has a lithium halide 150 inside the pores 110a of the porous carbon material 110. As a result, an ion conduction path advantageous for movement of lithium ions can be constructed in the positive electrode active material 120, and lithium ions can be efficiently introduced inside the pores 110a of the porous carbon material 110 through the lithium halide 150. On the surface of the positive electrode active material 120 located deep in the pores 110a, not only entrance and exit of electrons through the porous carbon material 110 but also entrance and exit of lithium ions from the solid electrolyte 130 through the lithium halide 150 can smoothly proceed. Therefore, in the positive electrode material 100 of the present invention, a reaction region in which the positive electrode active material 120, the lithium halide 150, and the porous carbon material 110 coexist is formed not only on the surface of the porous carbon material 110 but also inside the pores 110a, and the electrode reaction can sufficiently proceed. As a result, it is considered that the positive electrode active material 120 present inside the pores 110a can also be used as an active material in the electrode reaction, and the internal resistance of the battery is sufficiently reduced.

A charge-discharge reaction of a battery using a general sulfur-containing positive electrode material is represented by the following Formula (1), whereas a charge-discharge reaction of a battery using the positive electrode material of the present invention is represented by the following Formula (2). That is, since the number of electrons involved in the reaction is larger in Formula (2), it is considered that the exchange of electrons is promoted, the reaction of sulfur is promoted, and the battery reaction can be more efficiently advanced.
[Chemical Formula 1]
Conventional positive electrode material;

   S + 2Li⁺ + 2e⁻ ⇔ Li₂S (1)
Positive electrode material of the present invention;

   3S + I₃⁻ + 8Li⁺ + 8e⁻ ⇔ 3Li₂S + 2Li⁺ + 3I⁻ (2)

Here, whether or not the positive electrode active material or the lithium halide is placed inside the pores of the porous carbon material can be confirmed using various conventionally known methods. For example, regarding the cross-sectional image of the porous carbon material observed with a transmission electron microscope (TEM), elemental mapping derived from each of the materials is performed using energy dispersive X-ray spectroscopy (EDX), and an arrangement form of each of the materials can be confirmed using indices: the obtained elemental map; and the count number of elements derived from each of the materials relative to the count number of all elements.

In the positive electrode material according to the present aspect, it is preferable that the lithium halide is more present inside the pores of the porous carbon material than outside the pores (that is, the surfaces of the particles of the porous carbon material). In this way, since the conduction path of lithium ions can be more advantageously constructed in the positive electrode material, the internal resistance of the battery can be further reduced.

In the positive electrode material according to the present aspect, it is preferable that, in X-ray diffraction measurement using a CuKα ray of the positive electrode material, a crystalline peak not belonging to any of the porous carbon material, the positive electrode active material containing sulfur, and the lithium halide is present between two strongest peaks among peaks belonging to the lithium halide. That is, it is preferable that there is a new peak not belonging to any of raw materials (starting materials). Although the details are not clear, it is considered that the crystal structure giving this new peak advantageously works for movement of ions and contributes to resistance reduction.

In the positive electrode material of the present invention, a content of the lithium halide is, for example, 4 mass% or more and preferably 5 mass% or more and less than 50 mass% with respect to the total mass of the positive electrode material. When the content of the lithium halide is in the above range, a sufficient resistance reduction effect can be easily obtained. The content of the lithium halide is more preferably 5 to 30 mass%, still more preferably 10 to 30 mass%, and yet still more preferably 20 to 30 mass%. When two or more kinds of lithium halides are used in combination, the total amount thereof is preferably in the above range.

A mass ratio of the positive electrode active material containing sulfur and the lithium halide in the positive electrode material of the present aspect is not particularly limited, but is, for example, the positive electrode material : the lithium halide = 100 : 1 to 100 : 10000. The mass ratio of the positive electrode active material : the lithium halide is preferably 100 : 1 to 100 : 100, more preferably 100 : 1 to 100 : 50, and still more preferably 100 : 5 to 100 : 45. Within the above range, a high-performance battery can be obtained because the amount of the positive electrode active material can be sufficiently secured. In addition, the ion conductivity of the positive electrode material can be secured, and a network of ion conduction is sufficiently formed even inside the pores, which is preferable.

A mass ratio of the positive electrode active material containing sulfur and the porous carbon material in the positive electrode material of the present aspect is not particularly limited, but the ratio (positive electrode active material containing sulfur/porous carbon material) is, for example, 0.5 to 10 and preferably 2 to 8. Within the above range, the effect of the present invention can be more remarkably obtained.

In the positive electrode material of the present aspect, although not particularly limited, it is preferable that the solid electrolyte is not filled in the pores of the porous carbon material. The solid electrolyte is expensive, and has also very high reactivity with moisture. Therefore, when the solid electrolyte is handled, an environment not exposed to the atmosphere, for example, an environment with a low dew point (dew point < -60°C) is required, and it is necessary to use a glove box or a super dry room. In the positive electrode material of the present aspect, by placing the lithium halide inside the pores of the porous carbon material together with the positive electrode active material, an ion conduction path advantageous for movement of lithium ions can be constructed even when a solid electrolyte is not used. Since the solid electrolyte is not used, the positive electrode material can be produced at low cost in the air environment, and equipment and the surrounding environment can be simplified. In the positive electrode material of the present aspect, the content of the solid electrolyte among the components filled in the pores of the porous carbon material is preferably 3 mass% or less, more preferably 2 mass% or less, still more preferably 1 mass% or less, and most preferably 0 mass%.

In the positive electrode material of the present aspect, it is preferable that only the positive electrode active material containing sulfur and the lithium halide are filled in the pores of the porous carbon material. In this way, the effect of the present invention can be more remarkably obtained. In the positive electrode material of the present aspect, a total content of the positive electrode active material containing sulfur and the lithium halide among the components filled in the pores of the porous carbon material is preferably 95 mass%, more preferably 99 mass% or more, and most preferably 100 mass%.

A method for producing the positive electrode material according to the present aspect having the configuration as described above is not particularly limited, but the following (Production method 1) or (Production method 2) can be preferably used. In particular, according to (Production method 1), the effect of reducing the reaction resistance is more excellent.

### (Production method 1)

In the production method 1, first, a lithium halide is introduced into pores of the porous carbon material by solution impregnation. Next, the obtained porous carbon material having the lithium halide inside the pores is further thermally impregnated with a positive electrode active material containing sulfur, so that the positive electrode active material is placed inside the pores of the porous carbon material. Specifically, first, a solution in which a lithium halide is dissolved in a solvent is prepared, and a porous carbon material is dispersed therein to obtain a dispersion. Examples of the solvent include water; alcohols such as methanol, ethanol, 1-propanol, 2-propanol, ethylene glycol, glycerin, caprylic alcohol, lauryl alcohol, myristyl alcohol, cetyl alcohol, stearyl alcohol, oleyl alcohol, and linolyl alcohol; ethers such as diethyl ether, tetrahydrofuran, 1,4-dioxane, and 1,3-dioxolane; and the like. Since the solubility of the lithium halide is high, water or alcohols are preferable as the solvent, and alcohols are more preferable. Thereafter, the solvent is removed, and then a heat treatment is performed at a temperature of about 150 to 250°C for about 1 to 5 hours. As a result, a porous carbon material in which the inside of the pores is impregnated with the lithium halide is obtained. Subsequently, the porous carbon material in which the inside of the pores is impregnated with the lithium halide is dry-mixed together with the positive electrode active material, and further heat-treated under the same conditions as described above. As a result, the positive electrode active material is melted and penetrates into the pores of the porous carbon material, and a positive electrode material as a composite material in which the positive electrode active material is placed (filled) inside the pores of the porous carbon material together with the lithium halide can be obtained.

### (Production method 2)

In the production method 2, first, a positive electrode active material containing sulfur is introduced into pores of the porous carbon material by thermal impregnation. Next, the obtained porous carbon material having the positive electrode active material inside the pores is further subjected to solution impregnation with a lithium halide, so that the lithium halide is placed inside the pores of the porous carbon material. Specifically, first, the porous carbon material is dry-mixed with the positive electrode active material and heat-treated at a temperature of about 150 to 250°C for about 1 to 5 hours. As a result, a porous carbon material in which the inside of the pores is impregnated with the positive electrode active material is obtained. Next, a solution in which a lithium halide is dissolved in a solvent is prepared, and the porous carbon material in which the inside of the pores is impregnated with the positive electrode active material is dispersed therein to obtain a dispersion. Specific examples of the solvent are the same as those described above. Thereafter, the solvent is removed, and then a heat treatment is performed under the same conditions as described above. As a result, a positive electrode material as a composite material in which the positive electrode active material is placed (filled) inside the pores of the porous carbon material together with the lithium halide can be obtained.

Since the pore size of the porous carbon material is nanoscale, the lithium halide cannot be placed inside the pores of the porous carbon material simply by mechanically mixing the lithium halide and the porous carbon material in a solid state. In this case, the lithium halide only adheres to the surfaces of the particles of the porous carbon material. Similarly, even when the lithium halide and the porous carbon material thermally impregnated with the positive electrode active material are mechanically mixed in a solid state, the lithium halide cannot be introduced into pores of the porous carbon material. The positive electrode active material cannot also be introduced into the pores of the porous carbon material only by mechanical mixing in a solid state.

The content of the positive electrode active material in the positive electrode active material layer is not particularly limited, but for example, is preferably within a range of 35 to 99 mass%, and more preferably within a range of 40 to 90 mass%. The value of the content is calculated based on the mass of only the positive electrode active material excluding the porous carbon material and the lithium halide from the positive electrode material.

The positive electrode active material layer may further contain a conductive aid (one in which the positive electrode active material or the solid electrolyte is not held inside pores) and/or a binder, and as for specific and preferable forms thereof, those described in the section of the negative electrode active material layer described above can be similarly employed. Similarly, the positive electrode active material layer preferably further contains a solid electrolyte, and particularly preferably further contains a sulfide solid electrolyte. As for specific and preferable forms of the solid electrolyte such as the sulfide solid electrolyte, those described in the section of the negative electrode active material layer described above can be similarly employed.

The thickness of the positive electrode active material layer varies depending on the configuration of the intended secondary battery, but is, for example, preferably within a range of 0.1 to 1000 µm.

### [Positive electrode current collecting plate and negative electrode current collecting plate]

A material constituting the current collecting plates (25 and 27) is not particularly limited, and a known highly conductive material conventionally used as a current collecting plate for a secondary battery can be used. As a constituent material of the current collecting plate, for example, a metal material such as aluminum, copper, titanium, nickel, stainless steel (SUS), or an alloy thereof is preferable. From the viewpoint of weight reduction, corrosion resistance, and high conductivity, aluminum and copper are more preferable, and aluminum is particularly preferable. The same material or different materials may be used for the positive electrode current collecting plate 27 and the negative electrode current collecting plate 25.

### [Positive electrode lead and negative electrode lead]

Although not illustrated, the current collector and the current collecting plate may be electrically connected with a positive electrode lead or a negative electrode lead interposed therebetween. As a constituent material of the positive electrode and negative electrode leads, a material used in a known lithium secondary battery can be similarly adopted. The portion taken out from an outer casing is preferably covered with a heat resistant and insulating heat shrinkable tube or the like so as not to affect a product (for example, an automotive component, particularly an electronic device, or the like) due to electric leakage caused by contact with peripheral devices, wiring lines, or the like.

### [Battery outer casing material]

As the battery outer casing material, a known metal can case can be used, and a bag-shaped case using the laminate film 29 containing aluminum, which can cover a power generating element as illustrated in Figs. 1 and 2, can be used. As the laminate film, for example, a laminate film having a three-layer structure formed by laminating polypropylene (PP), aluminum, and nylon in this order can be used, but the laminate film is not limited thereto at all. From the viewpoint of high output and excellent cooling performance, and suitable application for batteries for large devices for EV and HEV, the outer casing material is desirably a laminate film. Further, from the perspective of easy adjustment of a group pressure applied to the power generating element from an outside, the outer casing material is more preferably a laminate film containing aluminum.

The laminate type battery according to the present aspect has a configuration in which a plurality of single battery layers are connected in parallel, and thus has a high capacity and excellent cycle durability. Therefore, the laminate type battery according to the present aspect is suitably used as a power source for driving EV and HEV.

Although one embodiment of the lithium secondary battery has been described above, the present invention is not limited to only the configurations described in the above-described embodiment, and can be appropriately changed based on the description of the claims.

The type of battery to which the lithium secondary battery according to the present aspect is applied, is for example, a bipolar type battery including a bipolar electrode having a positive electrode active material layer electrically coupled to one surface of a current collector and a negative electrode active material layer electrically coupled to an opposite surface of the current collector.

The secondary battery according to the present aspect may not be an all-solid state type. That is, the solid electrolyte layer may further contain a conventionally known liquid electrolyte (electrolyte solution). The amount of the liquid electrolyte (electrolyte solution) that can be contained in the solid electrolyte layer is not particularly limited, but is preferably such an amount that the shape of the solid electrolyte layer formed by the solid electrolyte is maintained and liquid leakage of the liquid electrolyte (electrolyte solution) does not occur.

The present invention includes the following aspects and embodiments:
1. A positive electrode material containing: a porous carbon material; a positive electrode active material containing sulfur; and a lithium halide, wherein at least a part of the positive electrode active material and at least a part of the lithium halide are placed inside pores of the porous carbon material;
2. The positive electrode material according to 1., wherein in X-ray diffraction measurement, a crystalline peak not belonging to any of the porous carbon material, the positive electrode active material, and the lithium halide is present between two strongest peaks among peaks belonging to the lithium halide;
3. The positive electrode material according to 1. or 2., wherein a content of the lithium halide is 5 mass% or more and less than 50 mass%;
4. The positive electrode material according to any one of 1. to 3., wherein the lithium halide is more present inside the pores of the porous carbon material than outside the pores;
5. The positive electrode material according to any one of 1. to 4., wherein an average pore size of the porous carbon material is 100 nm or less;
6. The positive electrode material according to any one of 1. to 5., wherein a percentage of a pore volume of pores having a pore size in a range of 1 to 4 nm with respect to a pore volume of pores having a pore size in a range of 1 to 100 nm among the pores of the porous carbon material is 20% or less; and
7. A secondary battery comprising the positive electrode material according to any one of 1. to 6.

### Examples

Hereinafter, the present invention will be described in more detail with reference to Examples. However, the technical scope of the present invention is not limited only to the following Examples.

### <<Preparation example of test cell>>

### [Example 1]

### (Preparation of positive electrode material)

In a glove box in an argon atmosphere with a dew point of -68°C or lower, 1.0 g of lithium iodide (LiI manufactured by FUJIFILM Wako Pure Chemical Corporation) was added to 33 mL of super dehydrated ethanol (manufactured by FUJIFILM Wako Pure Chemical Corporation), and the mixture was stirred until the solution became transparent, and thus LiI was dissolved in ethanol. To the obtained solution, 0.50 g of a porous carbon material powder (CNovel (registered trademark) P(3)010 manufactured by Toyo Tanso Co., Ltd.) was added, and the mixture was well stirred to sufficiently disperse the porous carbon material in the solution. The container containing the dispersion liquid was connected to a vacuum device, and the pressure in the container was reduced to 1 Pa or less by an oil-sealed rotary pump while the dispersion liquid in the container was stirred by a magnetic stirrer. Since ethanol as a solvent was volatilized under reduced pressure, the ethanol was removed with the lapse of time, and the porous carbon material impregnated with LiI remained in the container. After the removal of ethanol under reduced pressure in this manner, the porous carbon material impregnated with LiI was heated to 180°C under reduced pressure, and heat-treated for 3 hours to prepare a LiI-impregnated porous carbon material.

Here, the average pore size of the porous carbon material used in this Example was measured by measurement based on adsorption and desorption of nitrogen before the above-mentioned treatment was performed. The measurement based on adsorption and desorption of nitrogen was performed using BELSORP mini manufactured by MicrotracBEL Corp., and was performed by a multipoint method at a temperature of -196°C. The BET specific surface area was determined by a multipoint method from the adsorption isotherm in a relative pressure range of 0.01 < P/P₀ < 0.05. The total pore volume was determined from the volume of the adsorbed N₂ at a relative pressure of 0.96. The pore size distribution was measured by the BJH method. An average pore size d was determined from d = 4V/S based on a BET specific surface area S and a total pore volume V assuming cylindrical pores. As a result, the average pore size of the porous carbon material used in this Example was 10 nm.

The pore size distribution of pores having a pore size in a range of 1 to 100 nm was measured according to the BJH method, the percentage of the pore volume of pores having a pore size in a range of 1 to 4 nm with respect to the pore volume of pores having a pore size in a range of 1 to 100 nm was calculated, and as a result, the percentage was 9%.

Next, in a glove box in an argon atmosphere with a dew point of -68°C or lower, 0.938 g of sulfur (manufactured by Aldrich) was added to 0.563 g of the LiI-impregnated porous carbon material prepared above, the mixture was sufficiently mixed with an agate mortar, the mixed powder was then placed in a sealed pressure-resistant autoclave vessel, and heated at 170°C for 3 hours to melt the sulfur, and thus the LiI-impregnated porous carbon material was impregnated with the sulfur. In this manner, a porous carbon material filled with sulfur and LiI in pores was prepared as a positive electrode material.

### (TEM-EDX measurement)

For the positive electrode material prepared in this Example, it was confirmed that sulfur and lithium iodide were placed inside the pores of the porous carbon material using TEM-EDX.

Specifically, powder particles of the positive electrode material were processed into a flake shape having a thickness of about 100 nm using a plasma focused ion beam processing apparatus (Helios G4 PFIB CXe manufactured by Thermo Fisher Scientific K.K., acceleration voltage: 30 kV). The flake-shaped observation sample was conveyed into a TEM device (multi-purpose analysis transmission electron microscope JEM-F200 manufactured by JEOL Ltd., acceleration voltage: 200 kV) without exposure to the atmosphere, the microstructure was confirmed, and at the same time, elemental map data of a portion corresponding to the inside of the particles was acquired by an EDX device (energy dispersive X-ray spectrometer, Dual SDD manufactured by JEOL Ltd., acceleration voltage: 200 kV) attached to the TEM (energy band measured by characteristic X-ray spectroscopy EDX mapping: 0 to 5 keV). From the obtained elemental map data, it was confirmed that sulfur and lithium iodide were placed inside the pores of the porous carbon material. In this Example, it was determined whether lithium iodide or the positive electrode active material was filled in the pores of the porous carbon material using iodine or sulfur as a labeling element. It was also confirmed that the lithium iodide was more placed inside the pores of the porous carbon material than outside the pores. Lithium iodide can be detected using either iodine or lithium as a labeling element.

### (Powder X-ray diffraction measurement)

The positive electrode material obtained as described above was subjected to powder X-ray diffraction measurement. SmartLab manufactured by Rigaku Corporation was used for the measurement, and the measurement was performed under the following conditions:
Scan speed (2θ/θ): 2°/min
Step width (2θ/θ): 0.02°
Radiation source: CuKα:λ = 1.5418 □.

The XRD spectrum of the positive electrode material obtained in this Example is shown in Fig. 4. For comparison, the XRD spectrum of a sample obtained by thermally impregnating a porous carbon material with only elemental sulfur in a similar manner as described above and the XRD spectrum of LiI were also shown. In the positive electrode material obtained in this Example, a new peak (indicated by an arrow) not belonging to any of starting materials was observed between the two strongest peaks indicated by ▼ among peaks belonging to LiI.

### (Preparation of positive electrode mixture)

In a glove box in an argon atmosphere with a dew point of -68°C or lower, 40 g of zirconia balls having a diameter of 5 mm, 0.762 g of the positive electrode material prepared above, and 0.238 g of a solid electrolyte (Li₆PS₅Cl manufactured by Ampcera Inc.) were put in a 45 mL zirconia container, and treated in a planetary ball mill (Premium line P-7 manufactured by Fritsch GmbH) at 370 rpm for 6 hours to obtain a powder of a positive electrode mixture. The composition of the obtained positive electrode mixture was set to sulfur : lithium iodide : solid electrolyte : porous carbon material = 48 : 19 : 24 : 10 (mass ratio).

### (Production of test cell (all-solid-state lithium secondary battery))

The battery was produced in a glove box in an argon atmosphere with a dew point of -68°C or lower.

A cylindrical convex punch (10 mm diameter) made of SUS was inserted into one side of a cylindrical tube jig (tube inner diameter: 10 mm, outer diameter: 23 mm, height: 20 mm) made of Macor, and 80 mg of sulfide solid electrolyte (Li₆PS₅Cl manufactured by Ampcera Inc.) was inserted from the upper side of the cylindrical tube jig. Thereafter, another cylindrical convex punch made of SUS was inserted into the jig to sandwich the sulfide solid electrolyte, and the sulfide solid electrolyte was pressed using an oil hydraulic press at a pressure of 75 MPa for 3 minutes to form a solid electrolyte layer having a diameter of 10 mm and a thickness of about 0.6 mm in the cylindrical tube jig. Next, the cylindrical convex punch inserted from the upper side was once removed, 7.5 mg of the positive electrode mixture prepared above was added to one side surface of the solid electrolyte layer in the cylindrical tube, and the cylindrical convex punch (also serving as a positive electrode current collector) was inserted again from the upper side and pressed at a pressure of 300 MPa for 3 minutes to form a positive electrode active material layer having a diameter of 10 mm and a thickness of about 0.06 mm on one side surface of the solid electrolyte layer. Then, the lower side of the cylindrical convex punch (also serving as a negative electrode current collector) was removed, a lithium foil (manufactured by The Nilaco Corporation, thickness: 0.20 mm) punched to a diameter of 8 mm and an indium foil (manufactured by The Nilaco Corporation, thickness: 0.30 mm) punched to a diameter of 9 mm as negative electrodes were overlapped, the overlapped foil was put in from the lower side of the cylindrical tube jig such that the indium foil was located on the solid electrolyte layer side, and the cylindrical convex punch was inserted again, and pressed at a pressure of 75 MPa for 3 minutes to form a lithium-indium negative electrode.

As described above, a test cell (all-solid-state lithium secondary battery) including a negative electrode current collector (punch), a lithium-indium negative electrode, a solid electrolyte layer, a positive electrode active material layer, and a positive electrode current collector (punch) laminated in this order was produced.

### [Example 2]

### (Preparation of positive electrode material)

In a glove box in an argon atmosphere with a dew point of -68°C or lower, 2.5 g of sulfur (manufactured by Aldrich) as a positive electrode active material and 0.5 g of a porous carbon material powder (CNovel (registered trademark) P(3)010 manufactured by Toyo Tanso Co., Ltd.) were sufficiently mixed with an agate mortar, the mixed powder was then placed in a sealed pressure-resistant autoclave vessel, and heated at 170°C for 3 hours to melt the sulfur, and thus the porous carbon material was impregnated with the sulfur. In this manner, a sulfur-impregnated porous carbon material was prepared.

In a glove box in an argon atmosphere with a dew point of -68°C or lower, 1.0 g of lithium iodide (LiI manufactured by FUJIFILM Wako Pure Chemical Corporation) was added to 33 mL of super dehydrated ethanol (manufactured by FUJIFILM Wako Pure Chemical Corporation), the mixture was stirred until the solution became transparent, and thus LiI was dissolved in ethanol. To the obtained solution, 3.0 g of the sulfur-impregnated porous carbon material prepared above was added, and the mixture was well stirred to sufficiently disperse the sulfur-impregnated porous carbon material in the solution. The container containing the dispersion liquid was connected to a vacuum device, and the pressure in the container was reduced to 1 Pa or less by an oil-sealed rotary pump while the dispersion liquid in the container was stirred by a magnetic stirrer. Since ethanol as a solvent was volatilized under reduced pressure, the ethanol was removed with the lapse of time, and the porous carbon material filled with sulfur and LiI in the pores remained in the container. After the removal of ethanol under reduced pressure in this manner, the porous carbon material was heated to 180°C under reduced pressure, and heat-treated for 3 hours to prepare a positive electrode material.

An all-solid-state lithium secondary battery was produced by a similar method as in Example 1 except for the above. In Example 2, the composition of the obtained positive electrode mixture was set to sulfur : lithium iodide : solid electrolyte : porous carbon material = 48 : 19 : 24 : 10 (mass ratio).

### [Example 3]

In the preparation of the positive electrode material of Example 1, 1.0 g of lithium iodide in the preparation of the LiI-impregnated porous carbon material was changed to 0.5 g. Then, 1.0 g of the obtained LiI-impregnated porous carbon material was impregnated with 2.5 g of sulfur. An all-solid-state lithium secondary battery was produced by a similar method as in Example 1 except for the above. In Example 3, the composition of the obtained positive electrode mixture was set to sulfur : lithium iodide : solid electrolyte : porous carbon material = 55 : 11 : 24 : 11 (mass ratio).

### [Example 4]

In the preparation of the positive electrode material of Example 1, 1.0 g of lithium iodide in the preparation of the LiI-impregnated porous carbon material was changed to 0.15 g. Then, 0.65 g of the obtained LiI-impregnated porous carbon material was impregnated with 2.5 g of sulfur. An all-solid-state lithium secondary battery was produced by a similar method as in Example 1 except for the above. In Example 4, the composition of the obtained positive electrode mixture was set to sulfur : lithium iodide : solid electrolyte : porous carbon material = 60 : 4 : 24 : 12 (mass ratio).

### [Example 5]

An all-solid-state lithium secondary battery was produced by a similar method as in Example 1, except that in the preparation of the positive electrode material, super dehydrated ethanol was changed to ultrapure water. In Example 5, the composition of the obtained positive electrode mixture was set to sulfur : lithium iodide : solid electrolyte : porous carbon material = 48 : 19 : 24 : 10 (mass ratio).

In the positive electrode materials prepared in Examples 2 to 5, it was confirmed that sulfur and lithium iodide were placed inside the pores of the porous carbon material by a similar TEM-EDX measurement as described above. It was also confirmed that the lithium iodide was more placed inside the pores of the porous carbon material than outside the pores. In the positive electrode materials prepared in Examples 2 to 5, as described above, a new peak was observed between the two strongest peaks among peaks belonging to LiI in the XRD spectrum. In Examples 3 and 4, it was confirmed that the intensity of the new peak decreased as the content of lithium iodide decreased.

### [Example 6]

An all-solid-state lithium secondary battery was produced by a similar method as in Example 1, except that in the preparation of the positive electrode material, lithium iodide was changed to lithium chloride (LiCl). In Example 6, the composition of the obtained positive electrode mixture was set to sulfur : lithium chloride : solid electrolyte : porous carbon material = 48 : 19 : 24 : 10 (mass ratio).

In the positive electrode material prepared in Example 6, it was confirmed that sulfur and lithium chloride were placed inside the pores of the porous carbon material by a similar TEM-EDX measurement as described above. It was also confirmed that the lithium chloride was more placed inside the pores of the porous carbon material than outside the pores.

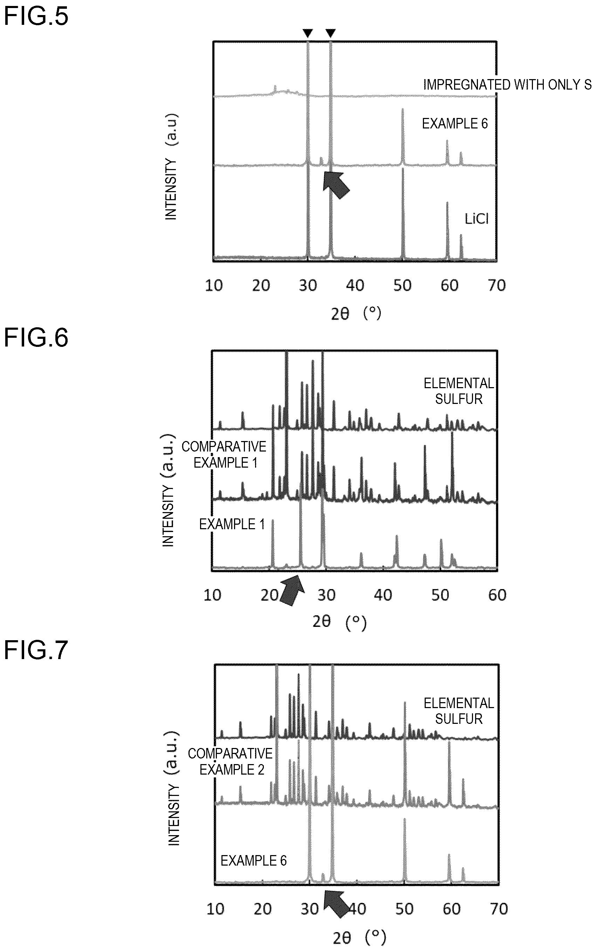

The XRD spectrum of the positive electrode material obtained in Example 6 was measured in a similar manner as described above. The results are shown in Fig. 5. For comparison, the XRD spectrum of a sample obtained by thermally impregnating a porous carbon material with only elemental sulfur and the XRD spectrum of LiCl were also shown. In the positive electrode material obtained in Example 6, a new peak (indicated by an arrow) not belonging to any of starting materials was observed between the two strongest peaks indicated by ▼ among peaks belonging to LiCl.

### [Example 7]

An all-solid-state lithium secondary battery was produced by a similar method as in Example 1, except that in the preparation of the positive electrode material, lithium iodide was changed to lithium bromide (LiBr). In Example 7, the composition of the obtained positive electrode mixture was set to sulfur : lithium bromide : solid electrolyte : porous carbon material = 48 : 19 : 24 : 10 (mass ratio).

In the positive electrode material prepared in Example 7, it was confirmed that sulfur and lithium bromide were placed inside the pores of the porous carbon material by a similar TEM-EDX measurement as described above. It was also confirmed that the lithium bromide was more placed inside the pores of the porous carbon material than outside the pores. The XRD spectrum of the positive electrode material obtained in Example 7 was measured in a similar manner as described above. In the positive electrode material obtained in Example 7, a new peak not belonging to any of starting materials was observed between the two strongest peaks among peaks belonging to LiBr in the XRD spectrum.

### [Example 8]

An all-solid-state lithium secondary battery was produced by a similar method as in Example 1, except that in the preparation of the positive electrode material, lithium iodide was changed to lithium fluoride (LiF). In Example 8, the composition of the obtained positive electrode mixture was set to sulfur : lithium fluoride : solid electrolyte : porous carbon material = 48 : 19 : 24 : 10 (mass ratio).

In the positive electrode material prepared in Example 8, it was confirmed that sulfur and lithium fluoride were placed inside the pores of the porous carbon material by a similar TEM-EDX measurement as described above. It was also confirmed that the lithium fluoride was more placed inside the pores of the porous carbon material than outside the pores. The XRD spectrum of the positive electrode material obtained in Example 8 was measured in a similar manner as described above. In the positive electrode material obtained in Example 8, a new peak not belonging to any of starting materials was observed between the two strongest peaks among peaks belonging to LiF in the XRD spectrum.

### [Comparative Example 1]

In a glove box in an argon atmosphere with a dew point of -68°C or lower, 40 g of zirconia balls having a diameter of 5 mm, 2.5 g of sulfur (manufactured by Aldrich), 0.5 g of a porous carbon material powder (CNovel (registered trademark) P(3)010 manufactured by Toyo Tanso Co., Ltd.), and 1.0 g of lithium iodide (LiI manufactured by FUJIFILM Wako Pure Chemical Corporation) were put in a 45 ml zirconia container, and treated in a planetary ball mill at 370 rpm for 6 hours to obtain a positive electrode material which is a sulfur/LiI/porous carbon material mixed powder. An all-solid-state lithium secondary battery was produced by a similar method as in Example 1 except for the above. In Comparative Example 1, the composition of the obtained positive electrode mixture was set to sulfur : lithium iodide : solid electrolyte : porous carbon material = 48 : 19 : 24 : 10 (mass ratio).

In the positive electrode material prepared in Comparative Example 1, TEM-EDX measurement was performed in a similar manner as described above, and as a result, lithium iodide was present outside the pores of the porous carbon material, and was not placed inside the pores.

The XRD spectrum of the positive electrode material obtained in Comparative Example 1 was measured in a similar manner as described above. The results are shown in Fig. 6. For comparison, the XRD spectrum of elemental sulfur and the XRD spectrum of the positive electrode material of Example 1 were also shown. In the positive electrode material of Comparative Example 1, peaks derived from starting materials such as elemental sulfur and LiI were observed, but no new peak was observed between the two strongest peaks among peaks belonging to LiI.

### [Comparative Example 2]

In a glove box in an argon atmosphere with a dew point of -68°C or lower, 40 g of zirconia balls having a diameter of 5 mm, 2.5 g of sulfur (manufactured by Aldrich), 0.5 g of a porous carbon material powder (CNovel (registered trademark) P(3)010 manufactured by Toyo Tanso Co., Ltd.), and 1.0 g of lithium chloride (LiCl) were put in a 45 ml zirconia container, and treated in a planetary ball mill at 370 rpm for 6 hours to obtain a positive electrode material which is a sulfur/LiCl/porous carbon material mixed powder. An all-solid-state lithium secondary battery was produced by a similar method as in Example 1 except for the above. In Comparative Example 2, the composition of the obtained positive electrode mixture was set to sulfur : lithium chloride : solid electrolyte : porous carbon material = 48 : 19 : 24 : 10 (mass ratio).

In the positive electrode material prepared in Comparative Example 2, TEM-EDX measurement was performed in a similar manner as described above, and as a result, lithium chloride was present outside the pores of the porous carbon material, and was not placed inside the pores.

The XRD spectrum of the positive electrode material obtained in Comparative Example 2 was measured in a similar manner as described above. The results are shown in Fig. 7. For comparison, the XRD spectrum of elemental sulfur and the XRD spectrum of the positive electrode material of Example 6 were also shown. In the positive electrode material of Comparative Example 2, peaks derived from starting materials such as elemental sulfur and LiCl were observed, but no new peak was observed between the two strongest peaks among peaks belonging to LiCl.

### [Comparative Example 3]

### (Preparation of positive electrode material)

In a glove box in an argon atmosphere with a dew point of -68°C or lower, 2.5 g of sulfur (manufactured by Aldrich) as a positive electrode active material and 0.5 g of a porous carbon material powder (CNovel (registered trademark) P(3)010 manufactured by Toyo Tanso Co., Ltd.) were sufficiently mixed with an agate mortar, the mixed powder was then placed in a sealed pressure-resistant autoclave vessel, and heated at 170°C for 3 hours to melt the sulfur, and thus the porous carbon material was impregnated with the sulfur. In this manner, a sulfur-impregnated porous carbon material was prepared and used as a positive electrode material. An all-solid-state lithium secondary battery was produced by a similar method as in Example 1 except for the above. In Comparative Example 3, the composition of the obtained positive electrode mixture was set to sulfur : solid electrolyte : porous carbon material = 50 : 24 : 10 (mass ratio).

### [Comparative Example 4]

An all-solid-state lithium secondary battery was produced by a similar method as in Example 1, except that in the preparation of the positive electrode material of Example 1, lithium iodide was changed to a sulfide solid electrolyte (Li₆PS₅Cl manufactured by Ampcera Inc.), and the operation in a glove box in an argon atmosphere with a dew point of -68°C or lower was changed to an operation in the air. In Comparative Example 4, the composition of the obtained positive electrode mixture was set to sulfur : solid electrolyte : porous carbon material = 48 : 43 : 10 (mass ratio).

### <<Evaluation example of test cell>>

The resistance value of the test cell produced in each of the above Comparative Examples and Examples was measured by the following method. All the following measurements were performed in a constant temperature thermostat bath set at 25°C and using a charge-discharge test device (HJ-SD8 manufactured by HOKUTO DENKO CORPORATION).

### (Measurement of resistance)

As a measurement device, a high-performance electrochemical measurement system (trade name "SP-200" manufactured by Bio-Logic SAS (France) was used, and impedance was measured as an electrochemical characteristic under measurement conditions of a frequency range of 7 MHz to 0.1 Hz, a temperature condition of room temperature, and an applied voltage of 50 mV. A test cell was placed in a thermostat bath, and evaluation was performed after the cell temperature became constant. The results are shown in Table 1 below. The battery of Comparative Example 4 had too high a resistance to be measured.

### [Table 1]

**Table 1**

| | Positive electrode active material | LiX | S/LiX/C (mass ratio) | LiX content (mass%) | Synthesis method | EIS resistance at 1 Hz (Ω/cm²) |
|---|---|---|---|---|---|---|
| Example 1 | S | LiI | 50/20/10 | 25 | LiX solution impregnation (EtOH) → S thermal impregnation | 121 |
| Example 2 | S | LiI | 50/20/10 | 25 | S thermal impregnation → LiX solution impregnation (EtOH) | 127 |
| Example 3 | S | LiI | 50/10/10 | 15 | LiX solution impregnation (EtOH) → S thermal impregnation | 131 |
| Example 4 | S | LiI | 50/3/10 | 5 | LiX solution impregnation (EtOH) → S thermal impregnation | 138 |
| Example 5 | S | LiI | 50/20/10 | 25 | LiX solution impregnation (H₂O) → S thermal impregnation | 128 |
| Example 6 | S | LiCl | 50/20/10 | 25 | LiX solution impregnation (EtOH) → S thermal impregnation | 123 |
| Example 7 | S | LiBr | 50/20/10 | 25 | LiX solution impregnation (EtOH) → S thermal impregnation | 139 |
| Example 8 | S | LiF | 50/20/10 | 25 | LiX solution impregnation (EtOH) → S thermal impregnation | 145 |
| Comparative Example 1 | S | LiI | 50/20/10 | - | Mechanical mixing | 202 |
| Comparative Example 2 | S | LiCl | 50/20/10 | - | Mechanical mixing | 206 |
| Comparative Example 3 | S | None | 50/0/10 | - | Thermal impregnation | 210 |
| Comparative Example 4 | S | Li₆PS₅Cl | 50/20/10 | 25 | Solution impregnation → thermal impregnation (in air) | Unmeasurable |

From the results shown in Table 1, it is found that according to the positive electrode material of the present invention, an internal resistance of a secondary battery which uses a positive electrode active material containing sulfur can be further reduced.

The present application is based on Japanese Patent Application No. 2022-058716 filed on March 31, 2022, the disclosure content of which is incorporated herein by reference in its entirety.

### Reference Signs List

- 10a: Laminate type battery
- 11': Negative electrode current collector
- 11": Positive electrode current collector
- 13: Negative electrode active material layer
- 15: Positive electrode active material layer
- 17: Solid electrolyte layer
- 19: Single battery layer
- 21: Power generating element
- 25: Negative electrode current collecting plate
- 27: Positive electrode current collecting plate
- 29: Laminate film
- 100, 100': Positive electrode material
- 110: Porous carbon material
- 110a: Pore
- 120: Positive electrode active material containing sulfur
- 130: Solid electrolyte
- 140: Region near interface
- 150: Lithium halide

## Claims

1. A positive electrode material comprising:
a porous carbon material;
a positive electrode active material containing sulfur; and
a lithium halide,
wherein at least a part of the positive electrode active material and at least a part of the lithium halide are placed inside pores of the porous carbon material.

2. The positive electrode material according to claim 1, wherein in X-ray diffraction measurement, a crystalline peak not belonging to any of the porous carbon material, the positive electrode active material, and the lithium halide is present between two strongest peaks among peaks belonging to the lithium halide.

3. The positive electrode material according to claim 1 or 2, wherein a content of the lithium halide is 5 mass% or more and less than 50 mass%.

4. The positive electrode material according to claim 1 or 2, wherein the lithium halide is more present inside the pores of the porous carbon material than outside the pores.

5. The positive electrode material according to claim 1 or 2, wherein an average pore size of the porous carbon material is 100 nm or less.

6. The positive electrode material according to claim 1 or 2, wherein a percentage of a pore volume of pores having a pore size in a range of 1 to 4 nm with respect to a pore volume of pores having a pore size in a range of 1 to 100 nm among the pores of the porous carbon material is 20% or less.

7. A secondary battery comprising the positive electrode material according to claim 1 or 2.
